# EUROPEAN PATENT APPLICATION

(11) **EP 1 981 243 A1**
(43) Date of publication of application: **15.10.2008**
(21) Application number: 07007602.1
(22) Date of filing: 13.04.2007
(51) Int. Cl.: H04L 29/08

(54) **A data communication network system for multi-channel bidirectional wireless data communication**

(71) Applicant: E-Senza Technologies GmbH, 78467 Konstanz (DE)
(72) Inventor: Shah, Amit, 78462 Konstanz (DE); Homana, Mihaela, 78464 Konstanz (DE)
(74) Representative: Hössle Kudlek & Partner

(57) **Abstract**

A data communication network system for multi-channel bidirectional data communication is provided which comprises at least one first network unit being configured to communicate with at least one second network unit and at least one gateway which is able to communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, and at least the one first network unit is configured to read out data from the first number of devices, to process the data and to transmit the data to the at least one first gateway which in turn is able to transmit the data to the at least one server, the at least one second network unit and/or the at least one second gateway, wherein the read-out of data performed by the network unit from the devices comprises multi-channel communications allowing a parallel read-out of data and a transmission of control signals. Furthermore, an appropriate method is disclosed.

## Description

### Technical field

This description refers to a wireless data communication network system for multi-channel bi-directional data communication, particularly to a data communication network system for multi-channel bi-directional data communication comprising a network unit being able to perform a parallel read out of data from a plurality of devices connected to the network unit and being able to communicate with a gateway communicating with a server.

### Summary

It is an object to provide a data communication network system for multi-channel bi-directional data communication comprising at least one first network unit configured to communicate with at least one second network unit and/or at least one gateway which can communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, wherein at least the one first network unit is configured to read out data from the first number of devices, to process the data and to transmit the data to the at least one first gateway which in turn can transmit the data to the at least one server, the at least one second network unit and the at least one second gateway, wherein the reading out of data performed by the network unit from the devices comprises multi-channel communications allowing a parallel reading out of data and a transmission of control signals.

A server application running on the server allows sending commands via the gateway to the network unit. Furthermore, the server application can receive data packets comprising data read out from the devices and messages from the network unit which are routed by the gateway to the server.

A gateway application is running on the gateway, which is able to control the gateway and process communication with the server and the network unit.

A network unit application is running on the network unit to control the network unit and to perform the communication with the devices, the gateway and the server, respectively.

Furthermore, the network unit comprises a circular buffer which can be controlled by the data processing means and can be filled with the data read out from the devices. Additionally, a send buffer is provided by the network unit, which can be filled with the data from the circular buffer for buffering the data while the data are communicated to the at least one gateway or the at least one second network unit until an acknowledgement signal (a so-called ACK) for a successful transmission is received from the gateway or the at least one second network unit.

According to one aspect the network unit further comprises a power supply, which can be for example a battery, and a power management unit in order to control the power supply, for example a battery management unit in order to indicate the charge level of the battery.

According to another aspect, the communication among the network units, among the gateways and between the network units and the gateways is a wireless communication, such as for example a low power wireless communication confirming to IEEE 802.15.4 standard.

According to another aspect the time synchronization means generally comprise at least a hardware synchronization unit with an integrated real time clock (a so-called RTC) interface and a synchronization software controlling the synchronization unit. The time synchronization is generally initialized by the server sending a time synchronization command to the network unit. The synchronization means further comprise a real time clock chip and the synchronization software comprises a time synchronization routine. The gateway also provides a synchronization hardware comprising a real time clock chip and a time synchronization routine.

The networking means can comprise PAN (Personal Area Network) management means for allowing the network unit to act as a router within a PAN, thus allowing communications with and among at least one second network unit being connectable to a second number of devices. In this case the additional network units can communicate with the router instead of communicating directly with the gateway. The router redirects the communication to the gateway. The additional network units themselves can intern act as routers for other network units.

The devices which are connectable to the network unit can be devices, such as actuators, control units, meters, valves and sensor units. In the following the devices are exemplified by sensor units, which are not meant to limit the devices which can be used.

The network communication within the network system among the different network components such as the at least one network unit, the gateway and the server can be built up autonomously, wherein the gateway can be provided as a master, also called SenzaGate as offered by E-Senza Technologies GmbH. The gateway is the only component being connected to the server. The network units can just communicate among each other or with the gateway and thus, via the gateway with the server.

The network units will generally connect only to a programmed gateway. Thus in case of a restart of the gateway, the network units will find the gateway again. Therefore, it is generally not necessary to restart any of the connected network units.

The gateway is responsible for performing tasks such as time synchronization of the network components, a so-called network heart beat, configuration and parameterization of the network units, wherein the execution of some of the tasks can be initialized by the server.

Such a multi-channel bi-directional data communication network can be realized using a wireless device network. A wireless device network, extended with the described network unit, provides new functionalities to evolve into a real-time industry strength data communication network. The network can handle multi-channel device information at the network unit as a so-called basis sensor node, also called SenzaBlock as marketed by E-Senza Technologies GmbH. The network unit itself can be remotely controlled by the server and an appropriate server application, respectively.

In the first instance, the above mentioned network unit is configured to communicate with sensor units which are connected to the network unit via the responsive sensor unit interfaces. Therefore, the network unit is able to read out data from the sensor units via the sensor unit interfaces. In addition, the network unit is able to communicate with another network unit or the gateway and the server, respectively. Within this communication between the network components messages are sent comprising for example commands for execution of tasks, information such as acknowledgments, or data which have to be transmitted to the gateway and/or the server. The data can comprise either a single sensor unit value or a data packet.

The network unit can be set into different operation modes. The first operation mode is a so-called "low power sleep mode" and the second operation mode is a "non sleep mode", a so-called "fast reaction always alive mode". The network unit is set into the respective mode by inserting a respective flag within a so-called configuration file.

In the sleep mode, the network unit "sleeps" for a predefined sleep time. After this time period the network unit gets a wakeup request from its hardware.

Upon the wakeup request the network unit wakes up for checking whether a message is available instructing to execute a new task such as reading out, storing or sending data from any connected sensor unit or not. If no task has to be executed, the network unit sends a so-called health message to the gateway for indicating its availability. If there is more than one message to be sent out, the network unit sends the pending messages one by one. In both cases, either after transmission of the last message or after sending the health message the network unit will wait for a defined, generally short time period for receiving messages from the gateway. If the network unit gets a message from the gateway, the network unit will react accordingly as requested in the message. If there is no message available and no task to execute, the network unit goes back in the sleep mode again.

In the "fast reaction always alive" mode, the network unit is always alive and paying attention to incoming messages from the gateway, wherein the processing of the messages is performed in a way similar to the above described processing in the sleep mode.

Therefore, in one aspect, the network unit provides the following main features:
- a sensor type, which is a parameter within a corresponding network unit application defining a respective sensor unit which has to be read out. The sensor type can be remotely configured by the server via sending an appropriate message to the network unit.
- a health cycle, which is a parameter within a corresponding network unit application defining a time interval, after which a health message has to be sent out to the gateway for indicating the availability of the network unit. The parameter can be remotely configured by the server via sending an appropriate message to the network unit.
- a store cycle, which defines after how many health cycles a sensor unit value should be stored in an internal cycle buffer. The value of the store cycle can be remotely configured by the server via sending an appropriate message to the network unit.
- an upload cycle, which is a parameter within a corresponding network unit application defining after how many health cycles a data packet is sent out to the gateway. The upload cycle can be remotely configured by the server via sending an appropriate message to the network unit.

In another aspect the network unit provides the following functionalities:
- an "automatically sign in" functionality to a network in order to automatically assign the network unit to a gateway or a router within an existing network system,
- a ping function to ping to another network unit within the network system,
- a time stamping function for the sensor unit values and the data packets in order to sign the sensor unit values with a unique time stamp, for example the time of reading out from the sensor unit,
- a function for automatically sending a complete circular buffer comprising all buffered sensor unit values or a single value to the gateway,
- a function for sending a complete circular buffer comprising all buffered sensor unit values or an actual sensor unit value as requested by the server.
- a function for routing a message to send the exact network topology or the network configuration.

The above mentioned features and functions are provided within the network unit generally comprising a unique state machine, which comprises the above mentioned time synchronization means, the networking means, the data processing means and the network unit application. Thus, the state machine manages all the tasks of the network unit and also ensures processing of an integrated data collection from the sensor units and a delivery of the data to the gateway and the server, respectively. The network unit enters a state machine after a successful assignment to the network.

According to a further aspect, the described state machine is configured to manage at least the following states to which the network unit can be set and, which are shown in the following in an order of highest priority first:
- a recover state
- a wait state
- an idle state
- a start sensor state
- a read sensor state
- a store data state
- a send data state
- a low power state

In the case described here, the recover state has the highest priority and is entered autonomously without any need for a command from another network component. This state is entered after a transmission of a message over wireless communication failed for a predefined number of efforts, for example after five times. In this state the state machine resets a MAC layer (media access control layer) which is used for the wireless communication and deletes all pending tasks. If the network unit is configured to sleep mode, it will enter immediately the sleep mode without checking any conditions. After waking up from sleep mode or in the case the network unit is set to fast reaction always alive mode, the network unit is set to the wait state.

The wait state is the most entered state of the network unit. If the network unit is alive, it will stay in this state and will check continuously the running tasks whether they are finished or not. The wait state is also an initial state for switching to other states defined by the pending tasks and is also entered after finishing a task to decide which state should be entered next.

In the case the network unit is not configured for the sleep mode, the idle state will be entered, when all tasks are performed. In the idle state a data reception is possible. After entering the idle state the network unit will enter again the wait state. In the idle state it is assured that there is no task left to be performed and the network unit is free to handle different tasks such as routing.

The start sensor state is entered after receiving a start sensor task by the internal state machine. However, the network unit will only enter this state, when all tasks with a higher priority are executed. In the state sensor state the sensor units are prepared for a following reading out of data. Therefore, they are waked up from a shut down mode. Depending on the setting of the sensor type, the respective sensor unit is selected and prepared for the following reading out of a respective sensor unit value.

After a respective sensor unit is ready for reading out data, the network unit can be set to the read sensor state for reading out the respective sensor unit value.

After reading out the data from the sensor unit, the network unit is set to the store data state in order to store the sensor unit value at a next free place in the cycle buffer.

By setting the network unit to the send data state, all messages and data packets can be sent to the gateway. The network unit remains in this state until all data are sent.

The network unit is set to the low power state, in case the network unit is configured for the sleep mode and all task have been performed. In this state the network unit will go in a so-called STOP3 mode to which an internal microcontroller is set and in which the wireless communication is stopped and turned off. Thus, no data reception is possible.

According to another aspect, the network unit can perform the following additional tasks, which can be executed in parallel and added to the state maschine:
- a "wait retransmit" task
- a "wait poll timeout" task
- a "wait new send" task
- a "start sensor" task
- a "wait sensor ready" task
- a "read sensor" task
- a "store data" task
- a "send data" task

The "wait retransmit" task will be set, after data comprising a sensor data packet have been sent out to the gateway. The network unit waits a defined time period for an ACK from the gateway and sends the data packet again, if it receives no ACK from the gateway within the defined time period.

The "wait poll timeout" task will also be set after a message has been sent out, independently whether an ACK is expected or not. For example after sending a health message no ACK is expected. By setting the "wait poll timeout" task, a time period is set to make sure that the network unit stays alive during this time period and able to receive commands from the gateway. After getting a command from the gateway or after a timeout, the "wait poll timeout" task is cleared.

The "wait new send" task is set in case that the network unit has to send more than one message. In this case the network unit waits a defined time period (e.g. 60ms) after a first message has been sent before sending out a following second message. This proceeding will increase the performance of handling a layer of the communication (a so-called MAC Layer), based on the 802.15.4 protocol. If there are no more data to be sent, the "wait new send" task will be cleared.

The "start sensor" task is configured to start the respective sensor unit at each store or upload single value state based on health, store and send cycle. The send cycle is also called upload cycle and referred to as upload cycle in the following. However, if the sensor type is on/off or impulse, this task will be skipped.

The "wait sensor ready" task is set after a previous "start sensor task" has been performed and cleared. A waiting time is defined which has to be elapsed before the sensor unit is declared to be ready for the new task depending on the selected value of the sensor type. After the timeout, this task will be cleared.

By setting the "read sensor task", the data will be read out from the sensor unit by the network unit. Therefore, the sensor unit has to be ready and alive.

The "store data" task will be performed, if the value of the store cycle is not zero and the time for storing of data comes. This task will be set in parallel to the "start sensor" task.

The "send data" task dedicates that there are one or more messages to be sent out. All data and messages which should be sent out are provided with a variable in order to indicate which message should be sent out.

According to another aspect, at a first startup, the network unit has to assign to an existing network system. The network unit is performing a scan for searching for its respective gateway and tries, in case of success, to assign to the gateway. The scan is performed until the respective gateway is found. After getting successfully assigned to the gateway the network unit sends a message to the gateway, which is forwarded by the gateway to the server.

After the gateway has got the message, it sends back an ACK to the network unit to confirm the successful receipt of the message. The network unit is waiting for this ACK from the gateway. If there is no ACK within a defined timeout period, the network unit will send this message again and again. After getting an ACK the network unit will switch in a normal functional mode performing the tasks as described above.

Furthermore, the messages can comprise a configuration packet. If the network unit gets such a configuration packet, the network unit will send an acknowledgement to the gateway for successful receipt of this configuration packet.

Such a configuration packet generally comprises a network time, a sleep mode type (sleep mode or non sleep mode), a sensor type and a store cycle, an upload cycle and a health cycle.

The network time is generally provided by the server in order to provide a time stamp to the message and to synchronize the network components. The mode type is a parameter which can switch the operation mode of the network unit between the sleep mode and the non sleep mode.

The sleep mode type can be a parameter, which defines either the sleep mode or the non sleep mode. The value of this sleep mode type is adopted by the network unit.

As already mentioned above the sensor type defines the respective sensor unit from which a sensor unit value has to be read out.

As already mentioned above the upload cycle defines, after how many health cycles a data packet is sent out to the gateway. Whether the data packet comprises a single sensor unit value or a complete cycle buffer depends on the value of the store cycle.

The health cycle defines a time period, which defines the interval between the transmissions of two succeeding health messages. As already mentioned above the health messages are sent to the gateway for indicating that the network unit is available and alive. Thus, the time period defines the interval between "going to sleep mode" and "waking up" of the network unit. If the network unit is in sleep mode the time for reacting to any commands corresponds to the time value defined by the health cycle. If the upload cycle is activated, the health message will also be sent out with the data packet after sending a defined number of health cycles e.g. five health cycles. This is done for additional network unit information features like routing info or battery status

The health cycle comprises two different settings. The first setting is the time value itself, e.g. which can be between 1 and 255. If a "0" is sent to the network unit by a mistake, the health cycle is set automatically to the value "1". The second setting is a time base.

The time base represents a clock source of an internal timer and can be set in a format of minutes or seconds. So for example, the health cycle can either be 1 to 255 seconds or 1 to 255 minutes. A combination of both formats is not possible. The maximum sleep, store, and sending time is about 4,25 hours and the minimum is about one second. However, if the store cycle is not zero it is recommended to set the health cycle not smaller than 5 seconds, otherwise it can influence the performance of the network unit. However, it is possible to read out every second a sensor value if a single value is enabled.

The store cycle is also mentioned above as a parameter defining after how many health cycles a sensor unit value should be stored in the internal cycle buffer. If the value of the store cycle is "0" the storing and buffering of sensor unit values is disabled and only one value will be sent out to the gateway. If the value of the store cycle is higher than "0", the buffering of the data from the sensor units in the cycle buffer will be enabled, and the sensor type, which can be set as store or upload cycle is changed. The circular buffer is cleared and the new cycles are starting from this time. The buffer is also flushed, if the new store cycle is zero, meaning no buffering of data, and the old store cycle has not been zero.

Generally, the network unit will always send an ACK, if it gets a configuration packet or a time synchronization command. If there is no ACK returned back to the gateway, the packet is either not received by the network unit, or the ACK is not received by the gateway. One reason therefor can be a busy gateway or high traffic on a corresponding radio channel used for the wireless communication.

By receiving the time synchronization command comprising the current gateway time, the network unit adopts the new time setting for a real time clock coupled to the network unit and sends out an ACK for successful receipt of the message. This time synchronization command is a broadcasted message, which can be sent to the network unit.

Besides the configuration packet, there are further messages which are sent among the network components, such as a time synchronization, a data request, acknowledgments, data packets, a health message and a debug message.

The time synchronization message can be sent out by the server to synchronize the whole network time. This is a broadcast message and it is sent out to a all network units in the network.

A data request message is sent out from the server to ask the network unit for a current sensor unit value. The network unit will read out the sensor unit without using the cycle buffer.

The acknowledgments (ACK) are sent out to the sending network component in order to acknowledge the receipt of the respective message. If the network unit receives messages from the gateway, then the network unit will send back an ACK including the type of the received message.

In this case, there is no need to request for data again. Another type of acknowledgement is received by the gateway, when a network unit is signing in to the network. If the assignment of the network unit was successful, it sends a message to the gateway which in turn can forward the message to the server. By receiving the message the server is informed about the network unit embedded within the network.

Generally, there are two kinds of data packets received from the network unit. One is a single value packet, which will be sent out in case the store cycle is set to the value zero (meaning no buffering). The single value packet includes the time, at which the value was read out, but not the receiving time at the gateway. However, if the network unit is not able to send the packet to the gateway, it will retransmit the packet after a while, and therefore, the time shown on the server can be different to the time of the last reaction from the respective network unit. It also includes the type of sensor unit and the value itself.

The other kind of data packet contains the whole data buffer. The included counts of values depend on the store cycle and the upload cycle. E.g. 1 upload and 3 store includes 3 values.

The data packet also comprises a time stamp identifying the time of storage of the last stored value. Because of the store cycle it is easy to recalculate the time for all included values and also the type of sensor unit without saving a time stamp for each value. However, if the network unit is not able to send the buffer out, it will retry continuously and give up after a predefined number of retrys, for example five times. This is not critical, because the network unit is going forward to store the data in background. In this case a received buffer value can include more than the calculated counts from store and upload cycle. Messages sent to the network unit will be acknowledged by the gateway.

The health message is sent out by the network unit in periodic intervals after every waking up of the network unit.

Furthermore, the gateway can send out debug messages. Besides the normal data packets and messages, which will be forwarded to the server, the gateway sends out some debug information which will be sent out for example for getting a configuration packet from the server. If a so-called MAC buffer of the gateway for sending data over wireless communication is overrun and no more messages can be stored or transmitted, the gateway gives out a message of allocation to be failed.

According to another aspect, the network system comprises a plurality of network units, each network unit being configured to communicate with the gateway. In this configuration, each network unit receives the already mentioned broadcasted time synchronization command. Each network unit sends an ACK in case of successful receipt of this command.

In the case the sensor type is a digital input/output value the network unit will acknowledge the receipt of a message received from the gateway or from the server. Otherwise the network unit will read out the actual selected sensor unit and send the obtained data to the gateway. In this case the network unit will not send an ACK, because the data to be sent will substitute the acknowledgement.

For most received commands the network unit sends an ACK back to the gateway. Only in case of a transmission of a data packet, no ACK is sent.

At every wakeup request from the hardware the network unit sends a health message to the gateway. Only if there are data which are to be sent to the gateway comprising sensor values the network unit will skip this health message. But if the upload is enabled, meaning every cycle sends sensor data, the network unit will send also one health message after sending five cycles. This is needed for battery status and routing information.

According to another aspect the network unit can be configured to be connected to one of four different types of sensor units. The sensor units can be an internal temperature sensor, which can be defined by default to be utilized before using any other sensor unit after starting the network unit, an internal analog to digital converter (A/D converter), an impulse interface or a digital input interface.

In another aspect an analog sensor is a 4-20mA analog sensor, wherein an incoming current or voltage level is read and sampled with an internal 12bit A/D interface. The analog sensor is connected to the A/D converter which is a 12bit AD converter module from a so-called microcontroller. The reference voltage of this module is 3V VCC.

The impulse interface detects an impulse signal incoming from a meter or a switch, wherein the impulse signals are detected at an integrated key board interface (KBI). The impulse signal should be a short impulse signal providing a high impulse level. The analog sensor can be an analog sensor with a general reed contact, such as a potential free switch, or a meter providing a least one so-called MOSFET switch, which needs power to connect through. This power will also be given from the network unit via the impulse interface.

The digital input interface can be a potential free digital input interface providing an on/off contact being normally set to be open (a so-called NO sensor). To this interface only a corresponding kind of switches should be connected. The network unit provides the needed power and reads back a close state on the switch connected to the digital input interface. If this state occurs, a message is immediately to be sent to the gateway.

However, in non sleep mode, the network unit detects the new state only after opening the connection via the digital input interface again. But in sleep mode, the network unit will send the error message at every wakeup cycle, if the contact is still closed. In the case that the contact is still closed and the network unit enters sleep mode, the network unit detects the new state only after opening the contact and waiting for a non sleeping period.

In another aspect the temperature sensor is directly mounted inside the network unit upon a motherboard, wherein the other sensor units can be connected via cables and connectors to the respective interfaces provided from the network unit on the motherboard.

In a further aspect the respective cycles of the network unit can be changed by the application running on the server.

According to another aspect the integrated circular buffer can have a size of 512 Byte, which means that there is a storage for 256 sensor unit values, wherein each sensor unit value has a size of 2 Bytes. The circular buffer will automatically be filled by one sensor unit value after a new value for the store cycle is received by the network unit and the data upload is not disabled by a value for the upload cycle of "0". The next sensor unit value will be stored at the next free space in the circular buffer. The complete circular buffer will be sent after receipt of a corresponding value for the upload cycle and the value of the store cycle is not "0". The maximum data packet size which can be sent out over wireless communication is 120 Byte, so the maximum buffer length in this case goes to 40 sensor unit values (80 Bytes). If there are more data in the circular buffer after sending the first packet, the network unit will send the whole content of the circular buffer packet by packet, until there is no more data in it. Generally, each packet which is sent to the gateway comprises one special command, the store cycle, the sensor type id and a timestamp for the last (newest) value in the buffer. So the timestamp for all the values in the buffer can be recalculated with the buffer length and the store cycle. If the buffer size is more than the maximum packet size, the network unit will set a timestamp after each 40 readings. That means for each packet that will be sent out, a separate timestamp is assigned. The data will be stored in the send buffer, until the network unit gets an ACK from the gateway. During this time the network unit will continue storing data in the circular buffer.

According to another aspect, the communication between the gateway and the server can be defined as follows. The gateway forwards the messages from the server to the network unit in two ways. First, the gateway stores the message in a network unit table for the network unit, which should get the message and hereafter, the gateway sends the message out directly after getting command from the server. However, if the respective network unit the message is assigned to, is in sleep mode, the gateway will send the message out after receiving either a data message or a health message from this respective network unit. The time interval between receiving the message from the server and forwarding it to the network unit is in the worst case as long as the time interval for waking up of the network unit which is defined by the health cycle. If the gateway does not get an ACK for sending the packet, it will retransmit after getting a next message from the respective network unit. If the network unit is not sending anything to the gateway, but is alive at this time the network unit can get this packet also in the direct way. This also works in the other direction: If the network unit is not sleeping, but does not get, or the gateway does not get an ACK, the gateway will retransmit after receiving a message from the respective network unit. The gateway will retransmit for example than five times after getting a message from network unit by not getting ACK from the network unit.

According to another aspect, at the startup of the network unit and the gateway the network time is zero. The network unit and the gateway need a time synchronization, which can be done by the server sending a time synchronization command or a configuration packet. The gateway can adopt the included time and can also forward it to the other network units. If there are one or more network units in sleep mode, the gateway reads out the time directly before it sends the packet out at a later date. All not sleeping network units will get the packets and the time directly.

According to another aspect, the communication between the server and the gateway has to be initialized after starting a corresponding server application on the server. The server sends out a ping request to the gateway in order to check the connectivity to the gateway and to determine the respective interface the gateway is connected to, which can be for example a connection over an USB port of the server. The gateway sends a response, including its own PAN ID, back to the server. Thus, the server knows which gateway is on which USB Port, in case of multiple networks. This message is sent out only once. If the gateway is getting restarted by any reason, it sends the same response out, to advise the server application that it is ready to communicate. This is one message, which is not forwarded to the network units.

According to another aspect the network comprises a hub, being a Personal Area Network (PAN) independent module providing a functionality to collect the data from network units which are connected to the hub instead of being connected to the gateway. The hub is essentially a state machine that processes incoming requests from a low rate Personal Area Network entity, such as a network unit. When the network unit needs to send a message to another network unit, it sends out a call by using a routing protocol to determine the path to a destination, in this case being the other network unit. Whenever the hub receives a request to send a message, it checks the state machine to see if the destination is available, and afterwards delivers the data. The hub can be used in a so-called star network or in a so-called multi hop network as a router, wherein no special configuration is needed for these two different topologies. In multi hop network the hub acts as a router and keeps track of a precursor list and an outgoing list. The precursor list comprises a set of network units routing through the network system to the network unit. The outgoing list comprises a set of network units being the next-hops to which the respective network system can route messages. In network systems, where all routes are bi-directional, these lists are substantially the same. Each network unit periodically sends messages to its precursors. These messages are used for creating routing tables and show the topology of the whole network system to a corresponding application on the server. A Java application looks for example for these messages and puts the routing information in a database. The network system topology visualization can be in a graphical format or a tabular format. A graphical visualization gives quick and clear picture of how network units are connected to each other and visualizes child and parent relations between the network units. The network unit is defined as a "parent", if it is nearer to the gateway than another network unit, which in turn is defined as a "child".

An implementation of the above mentioned routing is static because routes are formed and configured at start up and are not changed in the afterwards. The configuration is performed automatically and does not need any special arrangement. As routes do not change no route maintenance is needed to be performed. An initial router configuration is performed dynamically and automatically, whereby routers configure themselves in correspondence to the network system topology at their start up and deploy themselves automatically.

Once the hub is deployed and the network units are up and running, an application running on the server can send all possible commands in normal way as described above for a configuration with only one gateway and one network unit. The hub is completely transparent to the application. The underlying data link MAC layer takes care of addressing and any other issue.

For controlling the gateway the gateway software is implemented. The gateway software comprises the following features:
- ability to configure an APN (access point name) or a service provider
- ability to configure a Server IP address and a port number for communication
- ability to configure an email address for sending emails(optional)
- manual configuration or remote configuration over a GPRS link
- local storage of data at the gateway in addition to the storing within the network unit (optional)
- a remote reboot facility to restart the gateway.
- an auto recover function, able to clear all running processes and to restart the gateway if it is not successful to built up a GPRS connection to the server within 48 hours. Besides the above listed features, further possible various enhancements can be integrated, such as a configuration and a control of the gateway via SMS and making calls, whereby the gateway is able to perform critical tasks with external supervision. The gateway software cooperating with the network units and the application on the server gives seamless network integration beginning from tiny wireless sensors, GSM/GPRS to IP network and hence making remote location and industrial application to be available in a normal web browser and can be fully controlled from a normal desktop machine.

When the gateway is powered up it communicates to a service provider's APN (for example gprs.swisscom.ch) and gets a session for further communication. Once the gateway gets a session it opens a connection to the server by specifying the corresponding server IP address and the corresponding port number. An open request goes to the APN and then the APN in turn communicates to a corresponding server machine to get connection. If the requested server is reachable and accepts the request successfully the gateway gets a connection to the server and is ready to send its data. A complete acknowledgement and reliability is assured by an underlying network unit, if due to any reason data are not sent to the server, the gateway is notified and takes necessary steps to make a new connection to the server for data transfer. In addition to this mechanism before sending any data to the server, the gateway sends a request to check if the server is reachable or not, this step is taken to avoid any data loss if retransmission fails due to network unreachability. No data is sent unless it is assured that a connection to the server is alive.

If the connection is lost during a data transmission, the gateway is notified and stops sending the data and makes a new connection. The gateway analyses all data received from the network units. If there is some error message the gateway notifies an administrator on its mobile number by sending a SMS alarm. Afterwards the gateway looks again for a connection and whether more data has to be transmitted.

For example if the gateway is making connection to the server, it looks at the same time if there are configuration commands to be sent to the network units.

Further tasks, partially mentioned above, of the gateway are described in the following:
- wireless data collection from the network units, whereby to perform this process the gateway is always looking for data from the network units, to make sure that the data packets are not wrongly assembled and complete, and if a packet is received in small chunks, it has to assemble the chunks to build the complete packet.
- Storing the data from the network units when the network is not available. Once a complete packet is received it is stored in memory for local storage, these data remain stored unless they are delivered to the server by a GPRS link. If data could not be forwarded to the server and a power supply is lost, the data are not lost. They are still stored and will be transmitted after next power on.
- Time synchronizing the network units at regular intervals, whereby the gateway sends the time to all network units every day making sure that the network units are having the same time. The gateway also sends the time to a respective network unit when it gets assigned into the network.
- Automatic recovery of network units by sending to them all network information after boot up or failure recovery, whereby the latest network configuration is sent automatically to the network units when they recover from a power failure or when they boot up.
- Pinging the network units, whereby the gateway can ping the network units. A user can send a ping request from the server over a GPRS link, the gateway looks for this request and pings a respective network unit and sends the reply to the server over a GPRS link if the network network unit is reachable.
- Keeping track of the health of the network system, whereby, a network unit sends a health message at every health cycle and the gateway collects this message and sends it over a GPSR link to the server. As for other network units health is checked based on their periodic data, transmitted to the gateway. If some data from the network unit is received, it is marked at a corresponding server application similar to a health message.
- Accepting commands for store, health, upload cycles from a remote server via a GPRS link, whereby an application running on the server can issue all configurable parameters listed above, such as a telephone number, a SIM pin, an APN, a server IP address and ports, emails etc, wherein some of them can be optional. These parameters are stored at the gateway and used for a following message transfer and configuration.
- Configuring the network parameters remotely via a GPRS link, wherein the health cycle, the store cycle and the upload cycle can be configured over a GPRS link from the server. The effective time configuration is also available, meaning the network configuration parameters take effect at a given time onwards and they can be issued any time before.
- Data on request and periodic data management, wherein acorresponding application on the server sends data on demand and the gateway asks for data from all the network units, makes a GPRS connection if needed, and then sends all received data from the network units to the server.
- Sending a SMS alarm in emergency, in case of a digital input/output contact message is received from ON/OFF network units and then the gateway proceeds performing data transmissions.
- Auto recover and restart the gateway program from beginning if no GPRS connection for more than 48 hours, is established, wherein a main application of the gateway program is able to reset itself in case the gateway is unable to make a successful GPRS connection within 48 hours, wherein stored data is not lost within this process. This time is configurable over wireless communication for time synchronization. Another failure recovery application being part of the gateway program is always controlling whether a main application is running properly or not. If it indicates, that the main application resets itself, because it could not make a successful GPSR connection to the server within the default 48 hours or some other value as it can be configured, the failure recovery application restarts the main application with appropriate input parameters.
   The failure recovery application is not restarted or reseted. If it runs always, even after power up or reboot it automatically restarts along with the main application.
- Remote reboot of the gateway, wherein the main application is able to issue the gateway reboot command. To issue this command a user of the application needs special privilege and a respective password to send the reboot command to the gateway. On reception of the reboot command at the gateway, the whole network is stopped, and the gateway as well as the applications (GPRS application and fail recovery application ) are resumed. This command is intended to be used only in special cases, for example when no data is received by the gateway.

According to another aspect, the gateway comprises an embedded PC. Within the communication between the server and the gateway, the server will send commands over the embedded PC to the gateway. Some commands are only for the embedded PC, others are for the gateway. Therefore, an identifier is used within the messages, whereby the server has to add a start delimiter, e.g. '#', and a separator, e.g. '!', between all data fields and an end delimiter, e.g. '*', at the end. In the case that it's not specified otherwise, all data will be in hexadecimal format (hex format).

According to a further aspect a static routing is used, comprising an algorithm for static routing for 2.4 GHz radio. The application is based on a MAC software confirming to IEEE 802.15.4 standard. Routing functionality enables the network units in the network system to transfer data in store and forward manner. All network units in the network system have capability to be part of the network system as a child and at same time network units can be parent of a group of children as well. At startup the network units scan the network system for suitable parents and choose parents based on best available signal quality of existing adjacent network units. The network system is formed dynamically at runtime and it is not hard coded in a firmware. It gives chance to make network adaptive and selfconfigurable according to the network environment, but once the network system is setup, the network units should not be moved from one location to another. If it's needed to move, all the network units can be redeployed and restarted. All devices in the network system are full functional devices. Each router is essentially a state machine that processes incoming requests from a low rate personal area network entity. When the network entity needs to send a message to another network unit, it calls upon routing protocol to determine the next-hop. Whenever a router receives a request to send a message, it checks its routing table to see if a route exists. Each routing table entry consists of the following fields:
- Destination address.
- Next hop address.

If a route exists, the router simply forwards the message to the next hop. As already mentioned above, each network unit keeps track of a precursor list, and an outgoing list. In network systems where all routes are bi-directional, both lists are essentially the same. Each network unit periodically sends so-called C1 messages to its precursors. The C1 messages are used for making the routing table and show the topology of the whole network system in a desktop java based PC application on the server. The Java application looks for C1 messages and puts routing information in a database. The network system topology visualization can be in a graphical format and a tabular format. A graphical visualization gives quick and clear picture of how network units are connected to each other and child-parent relations between the network units.

Thus, the implementation of the above mentioned routing is static, because routes are formed at start up and are not changed in the following. As routes never change no route maintenance cost. The initial router configuration can be performed dynamically and automatically, wherein the routers configure themselves based on the network system topology at their start up, so easy to deploy.

According to another aspect the router functionality is performed while the routers have lower PAN id than the PAN gateway. This means that when a network unit scans for available routers or gateways, it chooses one which has a lower PAN id around it. So if the gateway is in direct range of a network unit and provides a better signal strength than other routers, this network unit will directly choose the gateway instead of any router available in the network system. When the router comes into the network system and scans for PAN, it can find associates. After association it makes itself as a gateway and allows devices to associate with it. When the router gets data packets from associated devices at an application level it forwards data to the PAN gateway. In the same way when it gets downward data from the PAN gateway (in example a parameter command or a ping request), it forwards the data to the appropriate network unit in the network system.

When the network unit is started up, it scans the channels and looks for available gateways or routers. If only a gateway is available it associates to that gateway and sends or receives data packets. In the case no gateway is available in the vicinity; the network unit looks for a router and chooses it as its gateway for further data transmission and data reception. If more than one router is available the router providing the best signal quality or a shorter path is chosen.

In contrast to, the network units adopting routing functionality, the PAN gateway is a normal PAN gateway and remains unchanged and compatible with previous applications. It treats the routers as devices and sends/receives packets normally.

The task of finding a route and the route discovery is basing on the fact that a network unit having a lower PAN id is near to a main PAN gateway and the network unit having greater PAN id is far away of the PAN gateway. So if the router or device is looking for an appropriate route then its deployment responsibility to deploy routers in the way that lesser PAN id gateway is near to PAN gateway. It's also possible that routers choose their PAN id one higher than the gateway to which it associates, in this case the network system topology is automatically formed in deployment time.

According to a further aspect a PAN gateway comes up and scans the network system, as no PAN exists, it declares itself as PAN gateway and is ready to receive requests from other routers or devices and to provide service to them. If a network unit comes up in the network, it can associate to the gateway directly of the network unit is in direct range and do not need any routing. Thus, many network units are not in the proximity of the gateway and they need a router for their communication. While a first router comes into network system and scans the network system, it finds the PAN gateway and associates to this gateway. As it directly associates to the PAN gateway it gets a low pan id being higher than the PAN id of the gateway. Thus, in network system there are two gateways, and the network units which are nearer to router 1 have the chance to associate with router 1 as the main PAN gateway is not in direct range. A router 2 also scans for available PAN gateways in the network. As it is not in direct range of the main PAN gateway; it associates with router 1 as network unit and then declares itself as a gateway for devices around it. So the devices which are coming up and are near to router 2 will associate to router 2. However, router 2 has a local PAN id 2 which is higher than router 1 PAN id. For the case the network size increases, they are configured automatically, but they are not hard coded previously. The routing rule redeclares a network unit having lower PAN id is nearer to the main PAN gateway than a network unit having a higher PAN id. In the case a device has two routing options, by finding two gateways in its range it has to choose the gateway having the lower PAN id, because it is nearer to main PAN gateway and therefore it needs less hops to route the data. Thus even with its static routing network units are able to choose the best path dynamically, meaning the best path is the shorter path. Paths based on link quality can also be chosen. In this case a calculation over all links of the route has to be performed; otherwise it may lead in unreliable link. E.g. if there are four links and the first two links are providing good signal quality, but the third link is of poor quality, the over all link quality is limited. So there must be a appropriate to check for a sufficient quality of the whole path.

According to another aspect a method for multi-channel bi-directional data communication within a data communication network system is provided. The method comprises the step of providing at least one first network unit configured to communicate with at least one second network unit and/or at least one second gateway which can communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, wherein at least the one first network unit is configured to read out data from the first number of devices, to process the data and to transmit the data to the at least one first gateway which in turn is able to transmit the data to the at least one server, the at least one second network, and/or the at least one second gateway, wherein the reading out of data performed by the network unit from the devices comprises multi-channel communications allowing a parallel read-out of data and a transmission of control signals.

According to another aspect the method for multi-channel bi-directional data communication within a data communication network system is provided, wherein the communication among the network units, among the gateways and between the network units and the gateways is a wireless communication.

According to another aspect the method for multi-channel bi-directional data communication within a data communication network system is provided, wherein the time synchronization means comprise a hardware synchronization unit with synchronization software and a real time clock interface.

According to another aspect the method for multi-channel bi-directional data communication within a data communication network system is provided, wherein the networking means comprise means for allowing the network unit to act as a router thus allowing communication with at least one second network unit being connectable to a second number of devices.

Furthermore a computer program product with a computer-readable medium and a computer program stored on the computer-readable medium with a program code which is suitable for carrying out a method as described in the above when the computer program is run on a computer.

Furthermore a computer program is provided comprising a program code which is suitable for carrying out a method as described in the above when the computer program is run on a computer.

Furthermore a computer-readable medium is provided with a computer program stored thereon, the computer program comprising a program code which is suitable for carrying out a method as described in the above when the computer program is run on a computer.

Furthermore a computer program is provided with a program code which is suitable for carrying out a method as described in the above when the computer program is run on a computer.

Further features and embodiments will become apparent from the description and the accompanying drawings.

For the purpose of clarity, the present discussion refers to an abstract example of a network system. However, implementations of the method and the system may operate with a wide variety of types of network systems including networks and communication systems dramatically different from the specific example as illustrated in the following drawings.

It should be understood that while details of one or more implementations are described in terms of a specific system, further implementations may have applications in a variety of communication systems, such as advanced cable-television systems, advanced telephone-networks or any other communication systems that would benefit from the system or the method. It is intended that the system as used in this specification and claims is realizable within any communication system unless the context requires otherwise.

Implementations are schematically illustrated in the drawings by way of an example embodiment and explained in detail with reference to the drawings. It is understood that the description is in no way limiting and is merely an illustration of various implementations.

### Brief description of the Drawings

In the drawings,
Figure 1 shows a data communication network system for a multi-channel bi-directional data communication;
Figure 2 a schematic diagram of an embodiment of a network unit;
Figure 3 showing a circuit diagram of an embodiment of the network unit;
Figure 4 shows a possible configuration of a sensor type;
Figure 5 shows a possible configuration of a health cycle;
Figure 6 shows a possible configuration of a store cycle;
Figure 7 shows a possible configuration of an upload cycle;
Figure 8 shows a ping function;
Figure 9 shows a possible time synchronization of the gateway and the network unit;
Figure 10 shows a sending scenario of data on request;
Figure 11 shows a processing of a circular buffer, a store buffer and a time stamping function;
Figure 12 shows a management of a power supply;
Figure 13 shows a possible communication between the network unit, the gateway and the server;
Figure 14 a schematic structure of a command for setting the cycles (parameters) in the network unit or the gateway;
Figure 15 shows a schematic structure of a command for restarting or rebooting the gateway application;
Figure 16 shows a schematic structure of a command for setting a threshold time;
Figure 17 shows a schematic structure of a command for setting the start time for an upload cycle;
Figure 18 shows a schematic structure of a command for setting an SMS alert number;
Figure 19 shows a schematic structure of a direct command for setting the real time;
Figure 20 shows a schematic structure of a direct command for performing a ping request;
Figure 21 shows a schematic structure of a direct command for a ping request;
Figure 22 shows a schematic structure of a direct command for performing a data request;
Figure 23 shows a schematic structure of a configuration packet;
Figure 24 shows a schematic structure of a status message which is sent from the gateway to the server;
Figure 25 shows a schematic structure of an acknowledgment which is sent from the gateway to the server;
Figure 26 shows a schematic structure of sensor unit data;
Figure 27 shows a schematic structure of a circular buffer;
Figure 28 shows a schematic structure of an acknowledgment (ACK) which is sent from the gateway to the network unit;
Figure 29 shows a schematic structure of a command for setting cycles (parameters) in the network unit;
Figure 30 shows a schematic structure of a direct command being used for direct actions in the network unit;
Figure 31 shows a schematic structure of a direct command being used for setting a real time in the network unit;
Figure 32 shows a schematic structure of a direct command being used for sending a ping request to the network unit;
Figure 33 shows a schematic structure of a direct command being used for sending an actual single value from a sensor unit;
Figure 34 shows a schematic structure of a direct command being used for sending a data request to the network unit;
Figure 35 shows a schematic structure of a configuration command;
Figure 36 shows a schematic structure of a health message;
Figure 37 shows a schematic structure of an acknowledgment;
Figure 38 shows a schematic structure of an error massage;
Figure 39 shows a schematic structure of sensor unit data;
Figure 40 shows a schematic structure of a buffer;
Figure 41 shows a schematic structure of a routing info indicating the path traveled from a source to a destination; and
Figure 42 shows a schematic structure of a trace route, indicating the path traveled from source to destination.

### Detailed Description

The following figures are showing embodiments of the present application, which are not to be understood to limit the scope of the application. The components are marked consistently over all following figures.

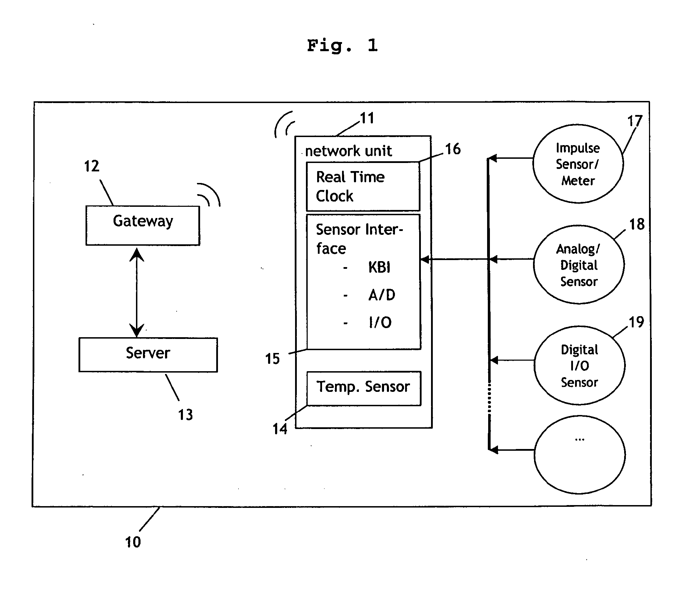

Fig.1 depicts a data communication network system 10 for multi-channel bi-directional data communication with a network unit 11, a gateway 12 and a server 13. The network unit 11 comprises an integrated real time clock 16, an internal temperature sensor 14 and a number of sensor unit interfaces 15, which are connected to a number of sensor units, such as an impulse sensor 17, an analog/digital sensor 18 and a digital I/O sensor 19. The connection is a multi-channel connection allowing parallel reading out of multiple sensor units. The server 13 is connected to the gateway 12 for bi-directional communication. Furthermore, the gateway 12 and the network unit 11 are connected via a wireless connection for a bi-directional communication. A server application running on the server 13 can send a message to the network unit 11 by sending the message to the gateway 12, which is forwarding the message via the wireless communication to the network unit 11. This message can comprise a task for reading out sensor unit values from any one of the sensor units 14, 17, 18, 19 or the message can comprise a time synchronization message for synchronizing the real clock time 16 with the time provided by the server 13. The read out data is send from the network unit 11 to the gateway 12, which is forwarding the data to the server 13, where the data can be processed. Any communication between the server 13 and the network unit 11 is routed via the gateway 12.

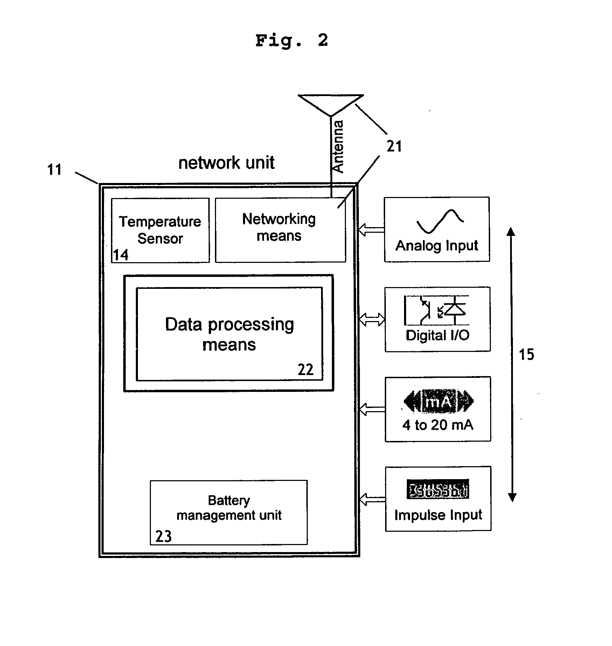

Fig.2 is depicting a schematic diagram of an embodiment of the network unit 11. The network unit 11 comprises the temperature sensor 14 and the sensor unit interfaces 15 in order to communicate with the sensor units. Furthermore, the network unit 11 comprises networking means 21 in order to communicate with the gateway 12, data processing means 22 for processing the data and controlling the network unit 11 and a battery management unit 23 in order to indicate the charge level of a battery.

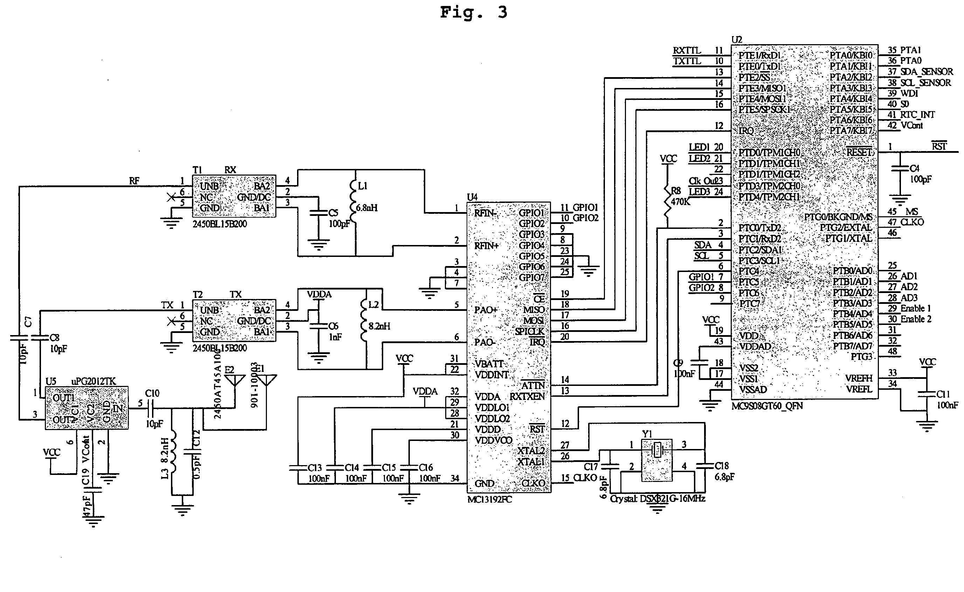

Fig 3 is showing a circuit diagram of an embodiment of the network unit 11.

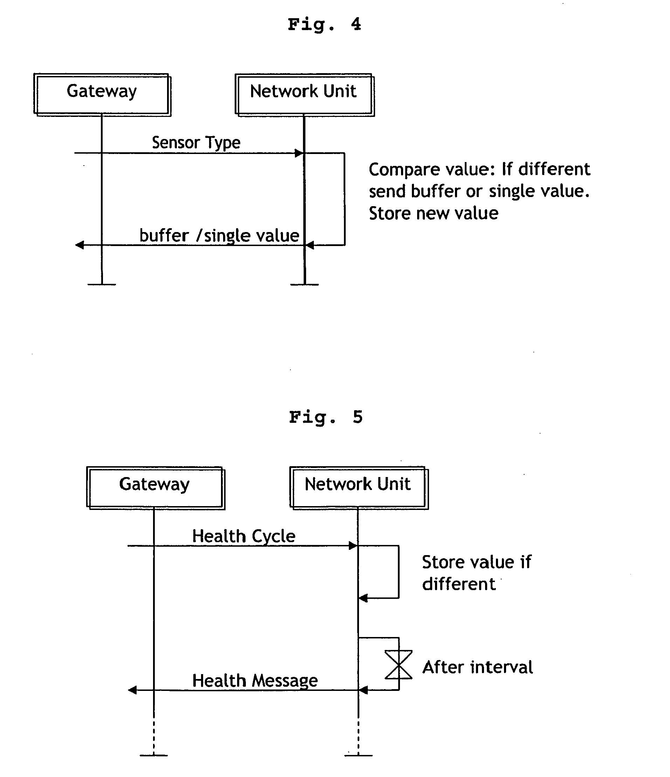

In fig. 4 a configuration of a sensor type via a command originating from a server application is shown. The sensor type is a parameter within the network unit defining a sensor unit, which has to be read out. The command containing the sensor type is forwarded by a gateway 12 to a network unit 11. If the value of the sent sensor type is equal to the value of the sensor type known to a corresponding network unit 11, the network unit 11 will ignore the command to switch the value of the sensor type. But if the new sensor type is different to the old type, the network unit sends and flushes an actual data buffer or an actual sensor unit value depending on a store cycle, before the network unit stores the value. If the value of the store cycle is set to "0", which means no buffering of data, the network unit 11 will send the actual sensor value to the gateway 12. Otherwise the network unit 11 will send the whole buffer to the gateway 12.

In fig. 5 the configuration of the health cycle via a command originating from the server application is shown. A command containing the health cycle is forwarded by the gateway to the network unit. If the value of the health cycle is "0", meaning no sending of health messages, the network unit will store the value and will not send any health messages. That means data sending to the gateway can be disabled by setting the health cycle to the value of "0". If the new value is the same as the old one, the network unit will ignore this command, otherwise it stores the new value and starts counting the time after setting the new value.

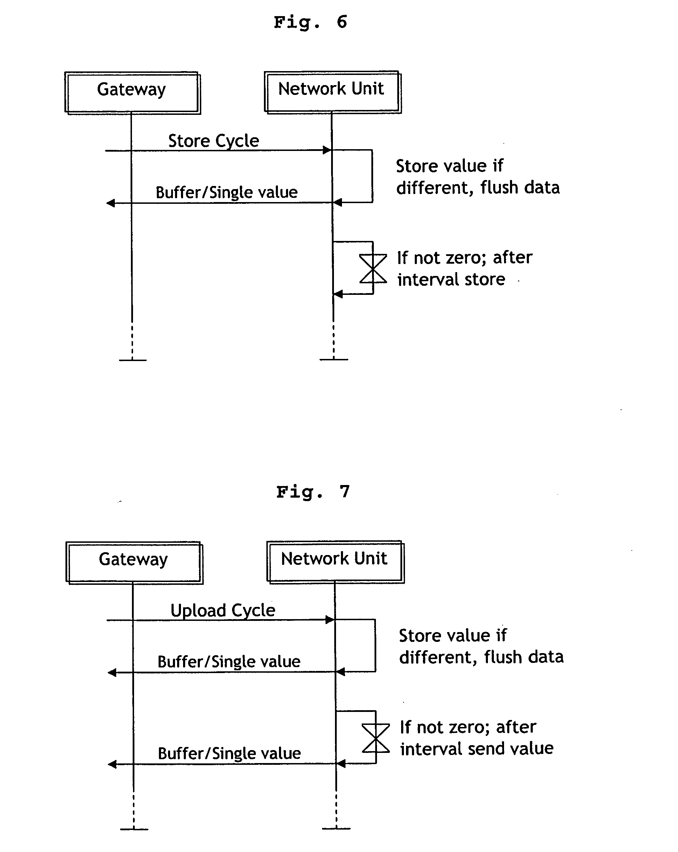

In fig. 6 the configuration of the store cycle via a command originating from the server application is shown. A command containing the store cycle is forwarded by the gateway to the network unit. If the value of the store cycle is "0", no data will be stored and no data buffer will be uploaded. Instead of the buffer, the network unit will send in the selected Data Upload Cycle the actual single value from the selected sensor.
If the new sensor cycle is different and the old one was zero, the network unit will flush the data buffer and the actual single sensor value for clearing the buffer. If the old one was different from zero, the network unit will only flush the data buffer. After setting the new cycle, a counting for storing and uploading begins. If the old cycle is equal to the new one, the network unit will ignore this command. If the store cycle interval is over, the network unit will store the actual value at this time from the selected sensor to the integrated circular buffer.

In fig. 7 the configuration of the upload cycle via a command originating from the server application is shown. A command containing the upload cycle is forwarded by the gateway to the network unit. If the value of the selected cycle is "0" and the old value was not "0", the network unit either flushs the data buffer or the single sensor unit value depending on the store cycle. After this, the network unit will not send any kind of sensor unit data, unless the cycle is set to a value being different to "0". That means, with an upload cycle of zero, sending of sensor values can be disabled. However, a data upload of single sensor unit values on request is still possible. If the new value is different to the old one, the network unit will flush the buffer or single value, depending on the store cycle, before storing the new upload cycle. The same value will be ignored.

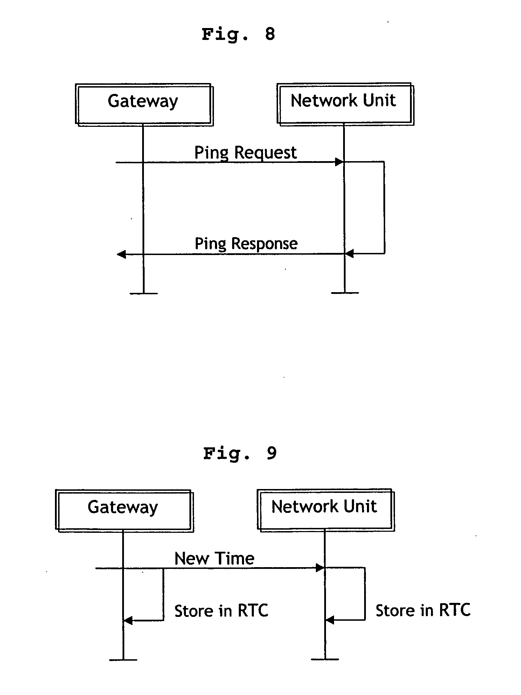

In fig. 8 the ping function is shown. The gateway is forwarding a ping request from the server to the network unit. If the network unit gets the ping request, it will send an ping response to the gateway, which is forwarding the ping response to the server.

In fig. 9 the time synchronization of the gateway and the network unit is shown. A time synchronization command providing a time value is sent from the server to the gateway, which adopts the time value to an integrated real time clock (RTC). The gateway also sends this time value to all the network units in the network (broadcasting), which also store the new time value to their respective integrated real time clocks.

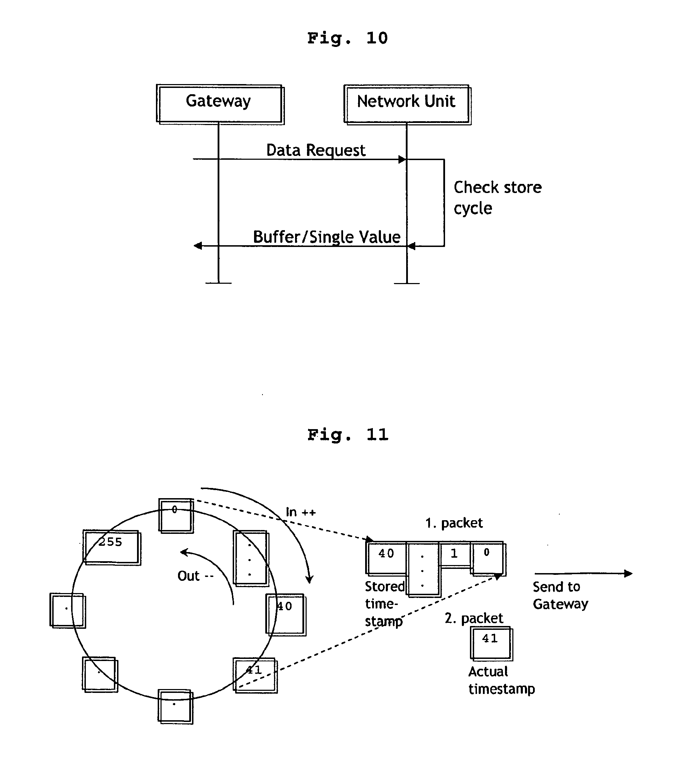

In fig. 10 sending of data on request is shown. A command providing a data request and originating from the server is forwarded by the gateway to the network unit. The network unit gets this command and checks the store cycle. If the value of the store cycle is equal to "0", the network unit will send the actual sensor value, otherwise it will send the actual data buffer.

In fig. 11 the processing of the circular buffer, the store buffer and the time stamping function are shown. The circular buffer will automatically be filled by one sensor unit value after a new value for the store cycle is received by the network unit and the data upload is not disabled by a value for the upload cycle of "0". The next sensor unit value will be stored at the next free space in the circular buffer. The whole circular buffer will be sent after receiving a corresponding value for the upload cycle and the value of the store cycle is not "0". The maximum data packet size which can be sent out over wireless communication is 120 Byte, so the maximum buffer length in this case goes to 40 sensor unit values (80 Bytes). If there are more data in the circular buffer after sending the first packet, the network unit will send the whole content of the circular buffer packet by packet, until there is no more data in it. Each packet which is sent to the gateway comprises a timestamp for the last (newest) value in the buffer. So the timestamp for all the values in the buffer can be recalculated with the buffer length and the store cycle. If the buffer size is more than the maximum packet size, the network unit will set a timestamp after each 40 readings. That means for each packet that will be sent out, a separate timestamp is assigned. The data will be stored in the send buffer, until the network unit gets an ACK from the gateway. But during this time the network unit will continue storing data in the circular buffer.

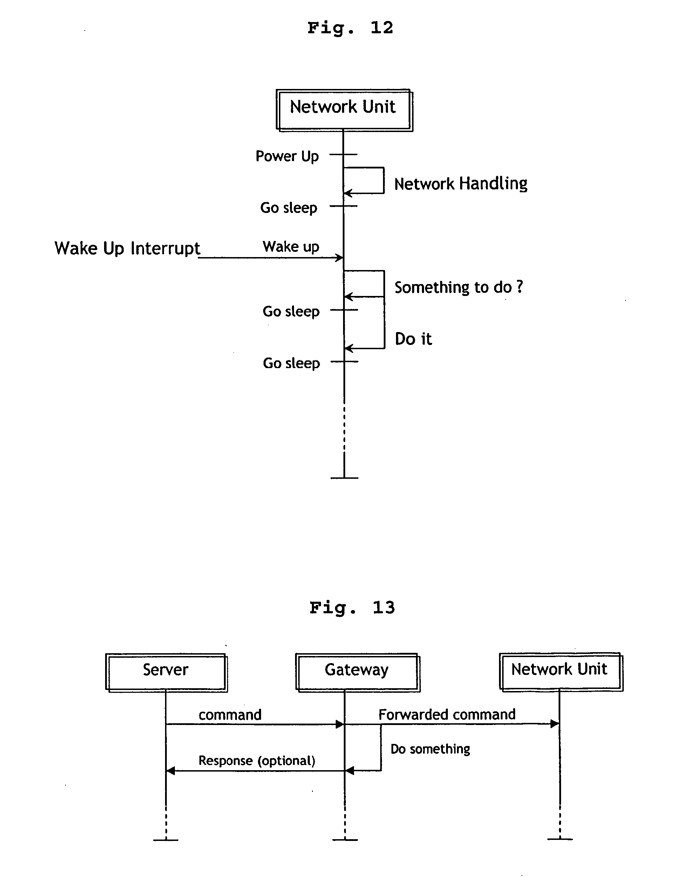

In fig. 12 the management of the power supply is shown. While the network unit is in non sleep mode it pays attention to incoming messages from the other network components. After finishing all tasks and after waiting for a predefined time interval the network unit goes to sleep mode. Upon a wake-up request the network unit wakes up for checking whether new tasks are available for execution. If there are new tasks, the network unit will execute these tasks. However, if there are no tasks to perform, the network unit goes back to sleep mode.

In fig. 13 the communication between the network unit, the gateway and the server is depicted. The server sends a command to the gateway, which forwards the command to the network unit.

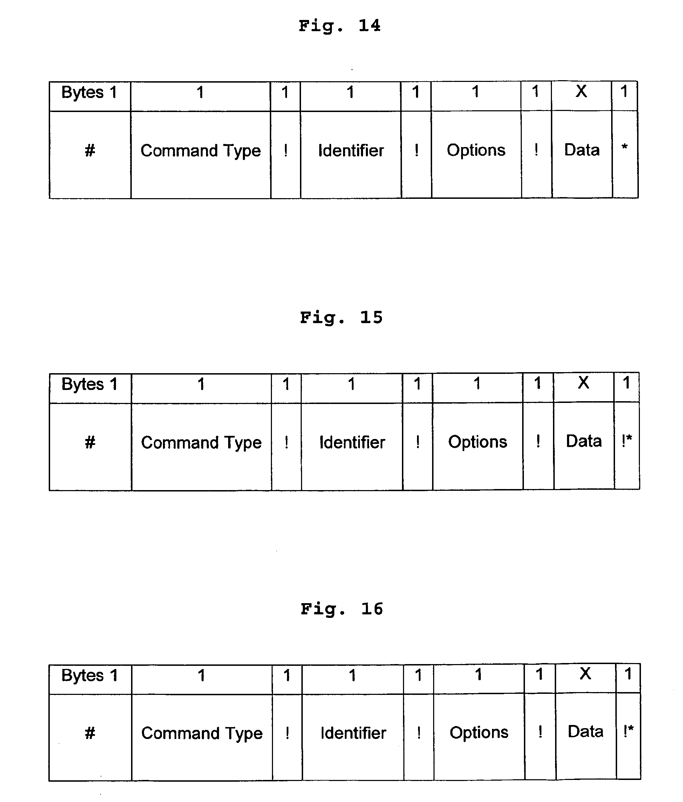

In fig. 14 the schematic structure of a command for setting the cycles (parameters) in the network unit or the gateway is shown, wherein the respective fields are defined as follows:
- Identifier:
   0 = Embedded PC
   1 = Gateway
- Options:
   0 = no Acknowledgement
   1 = Acknowledgement
- Data: Depending on command type
   Sensor Type:
      0 = Temperature Sensor
      1 = Impulse
      2 = Analog Digital
      3 = Digital I/O
- Value:
   Value means the time interval in which an state should happen. It depends on the overflow value from a so-called internal µC Timer. If the minimum overflow is 1 second, so the values represent seconds. Is the overflow 10 seconds, so the value represents 10 seconds, e.g. 2 = 20.
- Network unit ID:
   declares the network to which a message is intended. If it is a broadcast message, the message will be sent to work units in a network. In this case the ID is FFFF.
- Command type:

The Command type is of type Hex. That means in the application it should be defined as a hex number and not as string.

Fig. 15 shows the schematic structure of a command for restarting or rebooting the gateway application, wherein the respective fields are defined as follows:
- Command type C0= reboot the gateway/Restart the main application
- Identifier =0
- Option=0
- Data= 0 or 1 0= reboot the gateway, 1= restart the application

Fig. 16 shows the schematic structure of a command for setting a threshold time, when the gateway needs to be rebooted or the application should be restarted if there is no communication between server and gateway, wherein the respective fields are defined as follows:
- Command type C2= Set the threshold time in hours
- Identifier =0
- Option=0
- Data= time in hours

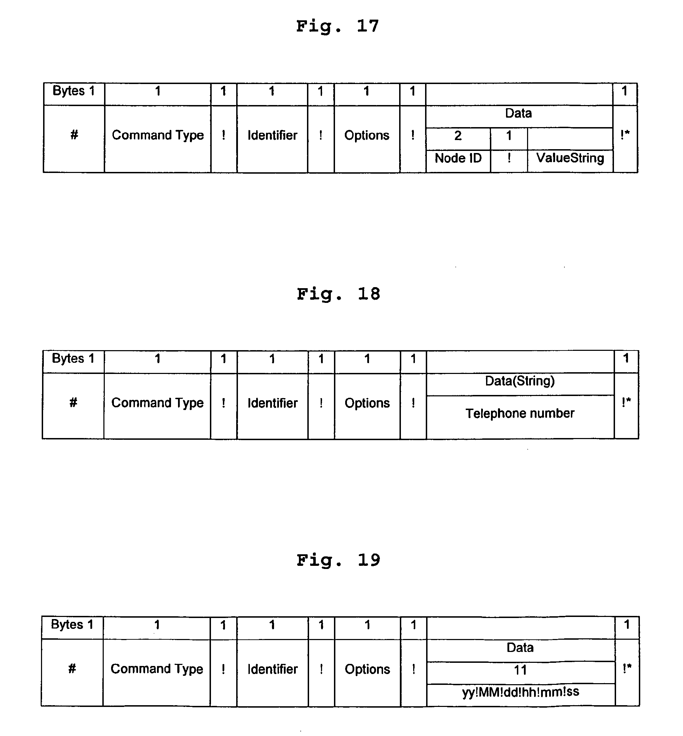

Fig. 17 shows the schematic structure of a command for setting the start time for the upload cycle, wherein the vaiable "valueString" has the format "hh:mm", where hh= hour, mm = minute.

Fig. 18 shows the schematic structure of a command for setting an SMS alert number.

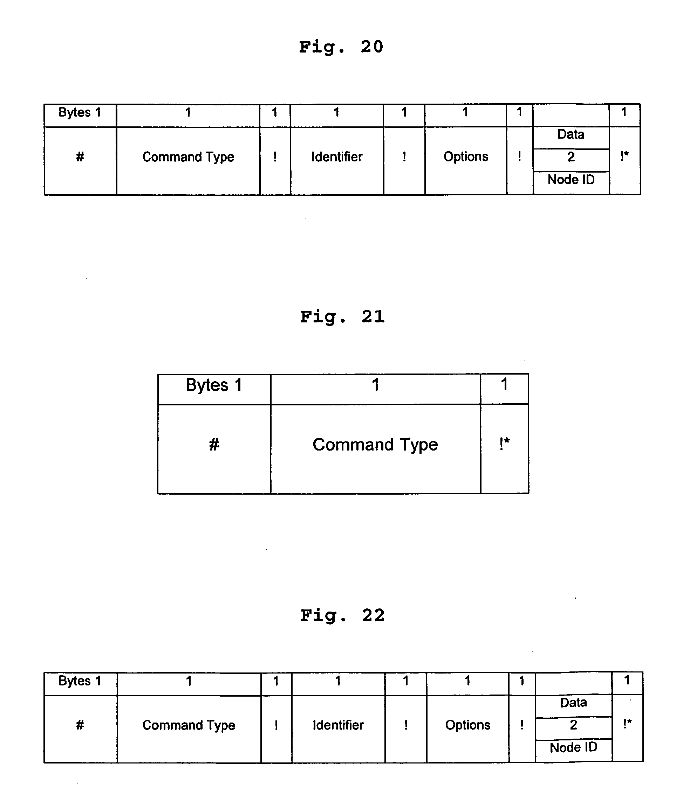

Fig. 19 shows the schematic structure of a direct command for setting the real time, wherein the data format is defined as follows:
- D0= set Real Time
   Data:
   These values are in decimal format. E.g. mm
      = 10 → 10 minutes not 0A in hexadecimal.
      yy = actual, or arbitrary year
      MM = actual, or arbitrary month
      dd = actual, or arbitrary days
      hh = actual, or arbitrary hours
      mm = actual, or arbitrary minutes
      ss = actual, or arbitrary seconds
   Fig. 20 shows the schematic structure of a direct command for performing a ping request (defined as D1), wherein the "data" field provides the PAN ID of the network unit to which be a ping will go. The ping response will be sent as an acknowledgement command type.

Fig. 21 shows the schematic structure of a direct command for the ping request (defined as D2) to ping the gateway. The gateway sends a ping response which provides its PAN ID.

Fig. 22 shows the schematic structure of a direct command for performing a data request (defined as D3), wherein the "data" field provides the PAN ID of the network unit from which the actual sensor unit value should be sent out.

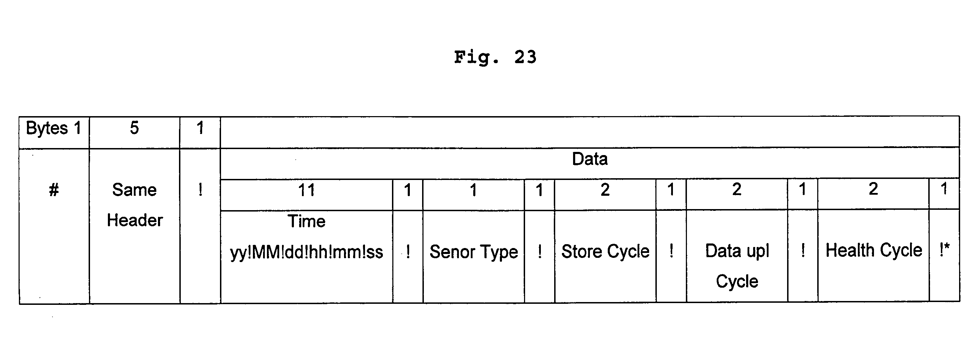

Fig. 23 shows the schematic structure of a configuration packet (defined as D4), wherein the respective fields are defined as follows:
Time: actual PC time
Sensor Type: type of sensor:
   0 = temperature
   1 = impulse
   2 = A/D
   3 = On/Off (Digital I/O)
Store Cycle: interval for storing data of a sensor unit; 0 means no storing, no buffer upload
Data upload Cycle: interval for upload of the whole buffer;
   0 means no buffer upload
Health Cycle: interval for sending health messages; 0 means send no messages

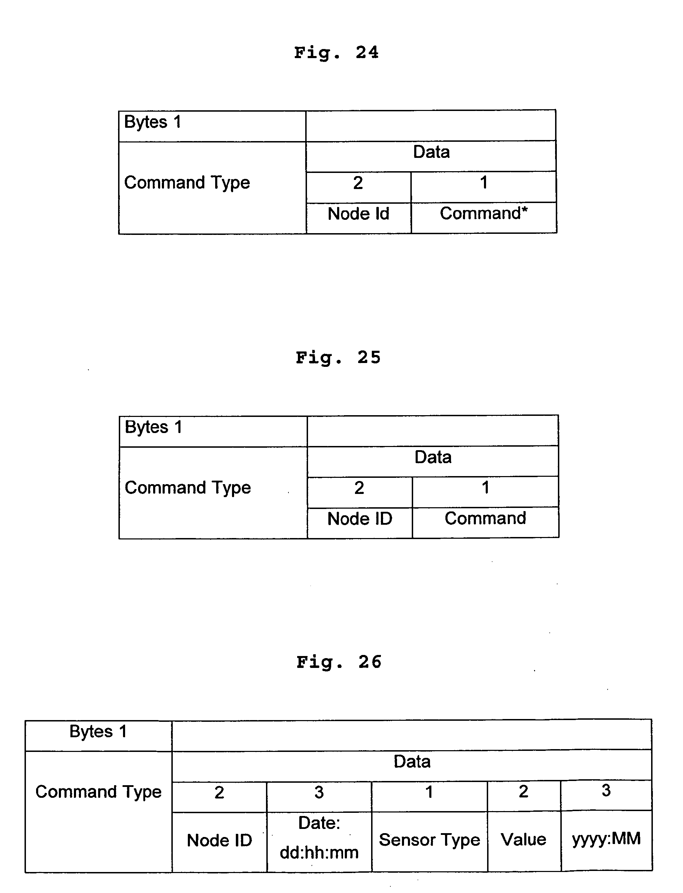

Figure 24 shows the schematic structure of a status message which is sent from the gateway to the server, wherein the respective fields are defined as follows (if the data format is not specified otherwise, all data will be in hex format):
Command type:
- E0 = Health Status Message - true (whereby there can be one byte extra before the network unit id, which shoes the battery level of the network unit)
- E3 = Error state at On/Off Contact
- *E4 = Timeout Error for sending commands to the network unit (after 5 times no ACK received). Herein, the gateway also defines, which command message is not acknowledged by the network unit.

Fig. 25 shows the schematic structure of an acknowledgment which is sent from the gateway to the server, wherein the respective fields are defined as follows (if the data format is not specified otherwise, all data will be in hex format):
Command type:
   - A0 = Acknowledgement
   - A2 = Association message from network unit
Command: (indicating which command will be acknowledged)
   - D0 = set Real Time
   - D1 = ping response (only send out, if there is no other data from this network unit)
   - D3 = data on reguest (will be send out from network unit, if sensor type is set to on_off
   - D4 = configuration packet (will be send out, if store or upload is the same as before, otherwise the network unit will flush his buffer, and also used at on_off sensor)

Fig. 26 shows the schematic structure of the sensor unit data, wherein the respective fields are defined as follows (if the data format is not specified otherwise, all data will be in hex format):
Command Type:
   - B0 = indicates a command for actual sensor data.
   - Network unit ID: indicating the network unit from which the values are comming.
   - Date: This data are in decimal format,
      which means 10 = 10 and not 0A in hexadecimal
      - dd = actual day
      - hh = actual hour
      - mm = actual minute
      - yyyy actual year (2006)
      - MM = actual month
      - Sensor Type:
         0 = temperature
         1 = impulse
         2 = A/D
         3 = digital I/O
   - Value:
      Including the actual sensor reading value.

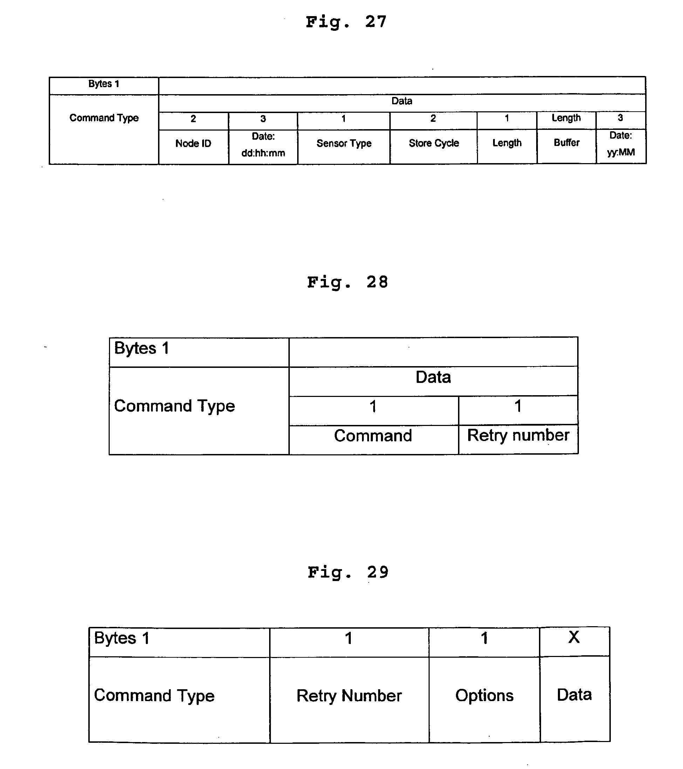

Fig. 27 shows the schematic structure of the circular buffer, wherein the respective fields are defined as follows (if the data format is not specified otherwise, all data will be in hex format):
Command Type:
   - B1 = indicates a command for the whole buffer
      Each value in the buffer has 2 bytes and therefore, there can be lenght/s number of values in the buffer.
   - Network unit ID:
      Indicating the network unit the values are originating.
   - Date:
      Indicating the date for the last stored value in the buffer. This value is in decimal format, which means 10
         = 10 and not 0A in hexadecimal
   - dd = day in decimal
   - hh = hour in decimal
   - mm = minute in decimal
   - yy = year in decimal (2006)
   - MM = month in decimal
   - Sensor Type: Indicating the type of sensor data.
   - Store Cycle: Indicates the Cycle in which interval the packets are stored.
   - Length: Indicating the length of the following buffer in Bytes (2 Bytes for each data packet). The half length indicates the number of packets.
   - Buffer: Including the whole data buffer.

Fig. 28 shows the schematic structure of the acknowlegdment (ACK) which is sent from the gateway to the network unit,
wherein the respective fields are defined as follows (if the data format is not specified otherwise, all data will be in hex format):
- A1 = Acknowledgement for sensor unit data or buffer data
- Command:
   B0 = Sensor Data
   B1 = Buffer
   E1 = Error on_off
   E0 = health
- Retry number: the gateway sends an ACK for received packet number.

Fig. 29 shows the schematic structure of the command for setting cycles (parameters) in the network unit and which is sent from the gateway to the network unit, wherein the respective fields are defined as follows (if the data format is not specified otherwise, all data will be in hex format):
- Retry Number: This will be incremented if a network unit gets an ACK. So the gateway can see if one packet is lost or if it gets the same packet and the ACK is not received by the network unit.
- Options:
   0 = no Acknowledgement
   1 = Acknowledgement
- Data: Depend on command type.
   Sensor Type:
      0 = Temperature
      1 = Impulse (KBI, e.g. Meter)
      2 = A/D Port
      3 = ON/OFF
- Value: Value means the time interval in which an stateshould happen. It depends on the overflow value from the internal µC Timer. If the minimum overflow is 1 second, so the values represent seconds. Is the overflow 10 seconds, so the value represents 10 seconds, e.g. 2 = 20.

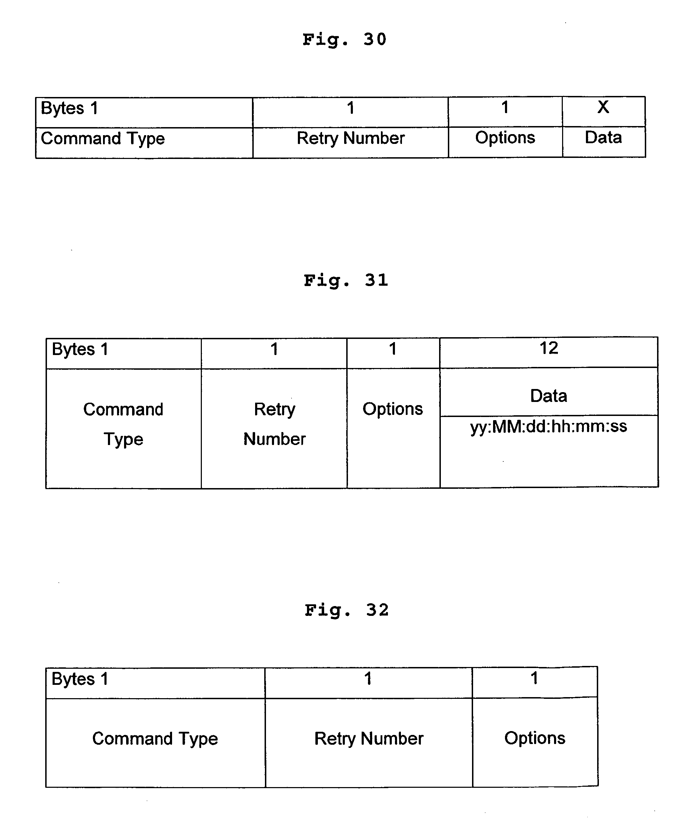

Fig. 30 shows the schematic structure of the direct command being used for direct actions in the network unit, such as ping request or buffer request. The direct command is sent from the gateway to the network unit.

Fig. 31 shows the schematic structure of the direct command being used for setting the real time in the network unit. The direct command is sent from the gateway to the network unit, wherein the respective fields are defined as follows (if the data format is not specified otherwise, all data will be in hex format):
- D0= set Real Time
   Data:
   yy = actual, or arbitrary year
   MM = actual, or arbitrary month
   dd = actual, or arbitrary days
   hh = actual, or arbitrary hours
   yy:MM:dd:hh:mm:ss
   mm = actual, or arbitrary minutes
   ss = actual, or arbitrary seconds
   Fig. 32 shows the schematic structure of the direct command being used for sending a ping request to the network unit. The direct command is sent from the gateway to the network unit, wherein the respective fields are defined as follows (if the data format is not specified otherwise, all data will be in hex format):
   - D1= Ping request: the Ping response will be send as an acknowledgement command type, whereby there is no data contained.

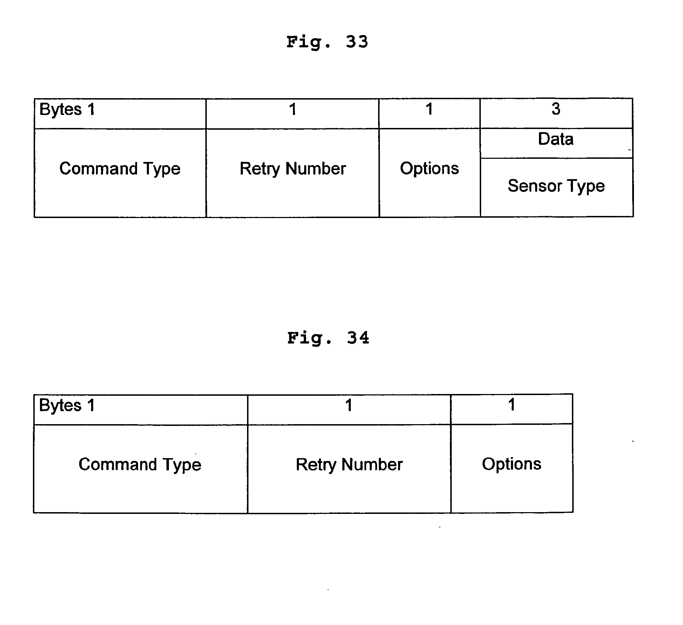

Fig. 33 shows the schematic structure of the direct command being used for sending an actual single value from a sensor unit. The direct command is sent from the gateway to the network unit, wherein the respective fields are defined as follows (if the data format is not specified otherwise, all data will be in hex format):
- D2= Actual Single data value from sensor network unit Data:
   Network unit ID (2 Byte): from which network unit the value should be read.
   Sensor Type(1Byte):
      0 =external
      1 = Temperature
      2 = Humidity

Fig. 34 shows the schematic structure of the direct command being used for sending a data request to the network unit. The direct command is sent from the gateway to the network unit, wherein the respective fields are defined as follows (if the data format is not specified otherwise, all data will be in hex format):
- D3= Data on request, in this case there is no data contained, the network unit is defined to send one buffer

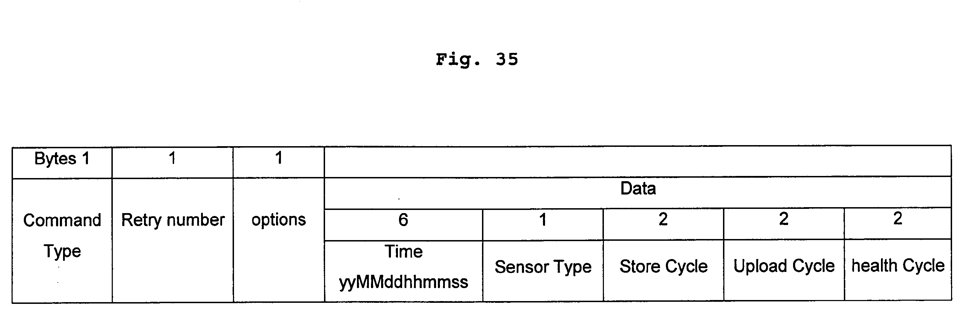

Fig. 35 shows the schematic structure of the configuration command, which is sent from the gateway to the network unit, wherein the respective fields are defined as follows (if the data format is not specified otherwise, all data will be in hex format):
- D4 = configuration command
   Time: actual PC time
   Sensor type:
   0 = Temperature
   1 = Impulse (KBI, e.g. Meter)
   2 = A/D Port
   3 = ON/OFF
   Store Cycle: interval for storing sensor data; 0 means no storing, no buffer upload
   Data up Cycle: interval for upload whole buffer; 0 means no buffer upload
   Health Cycle: interval for sending health messages;

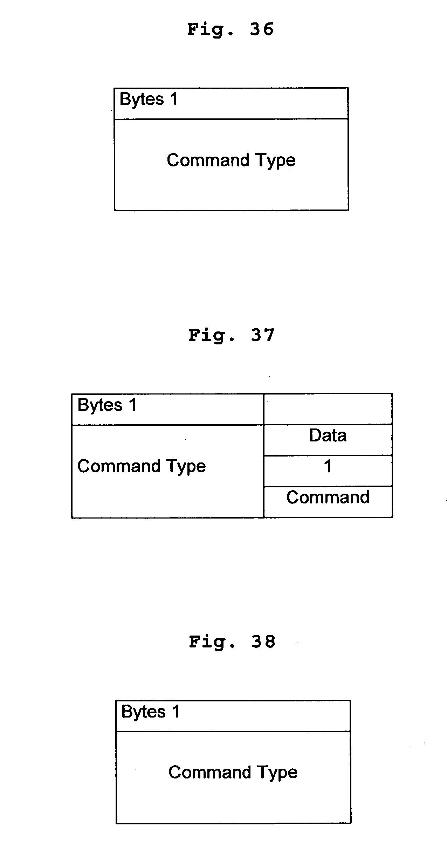

Fig. 36 shows the schematic structure of the health message, which is sent from the network unit to the gateway, wherein the respective fields are defined as follows (if the data format is not specified otherwise, all data will be in hex format):
E0 = Health Status Message from Network unit

Fig. 37 shows the schematic structure of the acknowledgment (ACK), which is sent from the network unit to the gateway, wherein the respective fields are defined as follows (if the data format is not specified otherwise, all data will be in hex format):
Command Type:
   A0 = Acknowledgement
Command: indicating which command will be acknowledged
   D0 = set Real Time
   D1 = Ping Response
   D3 = data on request (only if sensor type is set to on off
   D4 = configuartion packet (only if the store or the buffer is not same then before, otherwise network unit will send the buffer. And also if sensor type is on_off)

Fig. 38 shows the schematic structure of the error message, which is sent from the network unit to the gateway, wherein the respective fields are defined as follows (if the data format is not specified otherwise, all data will be in hex format):
E3 = Error state at On/Off Contact

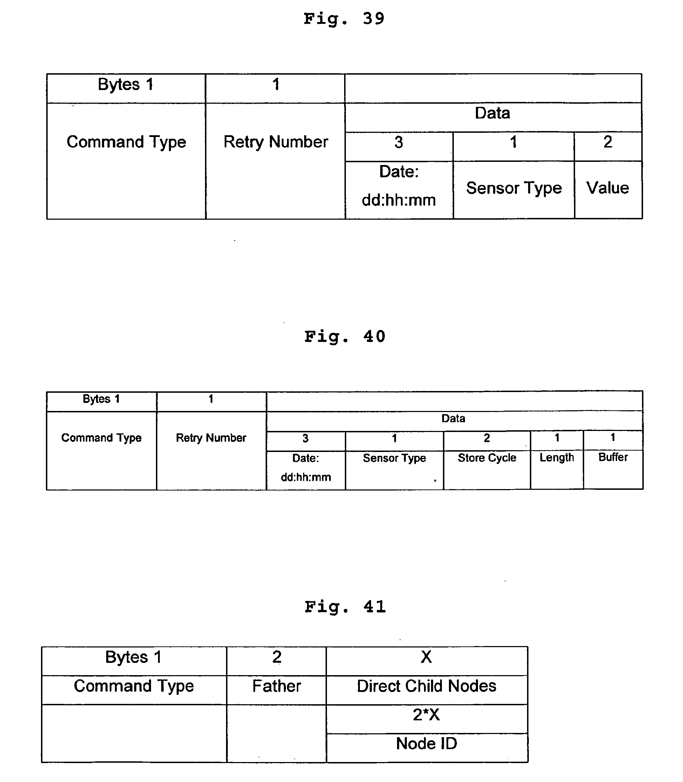

Fig. 39 shows the schematic structure of the sensor unit data, which is sent from the network unit to the gateway, wherein the respective fields are defined as follows (if the data format is not specified otherwise, all data will be in hex format):
- Command Type:
   B0 = indicates a command for actual sensor value
- Retry Number: being incremented if a network unit gets an ACK. So the gateway can see if one packet is lost or if it gets the same packet and the ACK is not received by network unit.
- Date: This data are in decimal format, which means 10 = 10 and not 0A in hexadecimal
   dd = actual day
   hh = actual hour
   mm = actual minute
- Sensor Type:
   0 = Temperature
   1 = Impulse
   2 = AD / Sensor
   3 = On / Off Contact (here no data will be sent out)
- Value: including 2 Byte of the actual sensor value.

Fig. 40 shows the schematic structure of the buffer, wherein the respective fields are defined as follows (if the data format is not specified otherwise, all data will be in hex format):
- Command Type:
   B1 = indicates a command for the whole buffer
- Retry Number: This will be incremented if a network unit gets the ACK. So the gateway can see if one packet is lost or if it gets the same packet and the ACK is not received by the network unit.
- Date: Indicate the date for the last stored value in the buffer. This data are in decimal format, which means 10 = 10 and not 0A in hexadecimal
   dd = day
   hh = hour
      mm = minute
- Sensor Type: indicating the type of sensor data
- Store Cycle: indicates the Cycle in which interval the packets are stored.
- Length: indicating the length of the following buffer in Bytes (2 Bytes for each data packet). The half length indicates the number of packets.
- Buffer: including the whole data buffer.

Fig. 41 shows the schematic structure of the routing info indicating the path traveld from a source to a destination, wherein the respective fields are defined as follows (if the data format is not specified otherwise, all data will be in hex format):
- Command Type= C0
- Next Hop = Gateway responsible for its children and defines the next hop.

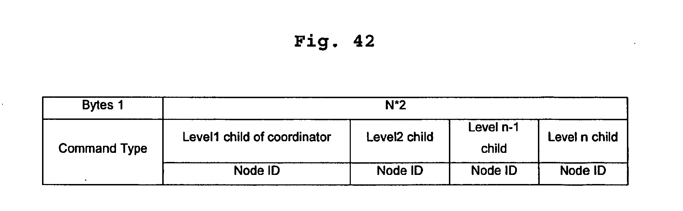

Fig. 42 shows the schematic structure of a trace route, indicating the path traveled from source to destination, wherein the respective fields are defined as follows (if the data format is not specified otherwise, all data will be in hex format):
- Command Type= C1
- Next Hop level n = n'th network unit in path from source to destination.

## Claims

1. A data communication network system for multi-channel bi-directional data communication comprising
at least one first network unit being configured to communicate with at least one second network unit and/or at least one gateway which is able to communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, and at least the one first network unit is configured to read out data from the first number of devices, to process the data and to transmit the data to the at least one first gateway which in turn is able to transmit the data to the at least one server, the at least one second network unit and/or the at least one second gateway, wherein the read-out of data performed by the network unit from the devices comprises multi-channel communications allowing a parallel read-out of data and a transmission of control signals.

2. The data communication network system according to claim 1, wherein the data processing means comprise a circular buffer which can be filled with the data read out from the devices.

3. The data communication network system according to any one of claims 1 to 2, wherein the communication among the network units, among the gateways and between the network units and the gateways is a wireless communication, respectively.

4. The data communication network system according to any one of claims 1 to 3, wherein the time synchronization means comprise a hardware synchronization unit with a synchronization software and a real time clock interface.

5. The data communication network system according to any one of claims 1 to 4, wherein the networking means comprise means for allowing the network unit to act as a router thus allowing communication with the at least one second network unit being connectable to a second number of devices.

6. A method for multi-channel bi-directional data communication within a data communication network system, the method comprises
providing at least one first network unit being configured to communicate with at least one second network unit and/or at least one gateway which is able to communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, and at least the one first network unit is configured to read out data from the first number of devices, to process the data and to transmit the data to the at least one first gateway which in turn is able to transmit the data to the at least one server, the at least one second network unit and/or the at least one second gateway,
wherein the read-out of data performed by the network unit from the devices comprises multi-channel communications allowing a parallel read-out of data and a transmission of control signals.

7. The method according to claim 6, wherein the communication among the network units, among the gateways and between the network units and the gateways is chosen as a wireless communication, respectively.

8. The method according to any one of claims 6 and 7,
wherein the time synchronization means comprise a hardware synchronization unit with synchronization software and a real time clock interface.

9. The method according to any one of claims 6 to 8, wherein the networking means comprise means for allowing the network unit to act as a router thus allowing communication with the at least one second network unit being connectable to a second number of devices.

10. A computer program with a program code which is suitable for carrying out a method according to any one of claims 6 to 9 when the computer program is run on a computer.

## Amended claims

### Amended claims in accordance with Rule 137(2) EPC.

**1.** A data communication network system for multi-channel bi-directional data communication comprising
at least one first network unit being configured to communicate with at least one second network unit and/or at least one gateway which is able to communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, and at least the one first network unit is configured to read out data from the first number of devices, to process the data and to transmit the data to the at least one second network unit or the at least one first gateway which in turn is able to transmit the data to the at least one server, the at least one second network unit and/or the at least one second gateway, wherein the read-out of data performed by the network unit from the devices comprises multi-channel communications allowing a parallel read-out of data and a transmission of control signals, wherein the communication among the network units, among the gateways and between the network units and the gateways is a wireless communication, respectively.

**2.** The data communication network system according to claim 1, wherein the data processing means comprise a circular buffer which can be filled with the data read out from the devices.

**3.** The data communication network system according to any one of claims 1 to 2, wherein the time synchronization means comprise a hardware synchronization unit with a synchronization software and a real time clock interface.

**4.** The data communication network system according to any one of claims 1 to 3, wherein the networking means comprise means for allowing the network unit to act as a router thus allowing communication with the at least one second network unit being connectable to a second number of devices.

**5.** A method for multi-channel bi-directional data communication within a data communication network system, the method comprises
providing at least one first network unit being configured to communicate with at least one second network unit and/or at least one gateway which is able to communicate with at least one server, at least one third network unit or at least one second gateway, wherein at least the one first network unit comprises time synchronization means, networking means, data processing means and a plurality of device interfaces allowing to connect the network unit to a first number of devices of a plurality of devices, and at least the one first network unit is configured to read out data from the first number of devices, to process the data and to transmit the data to the at least one second network unit or the at least one first gateway which in turn is able to transmit the data to the at least one server, the at least one second network unit and/or the at least one second gateway,
wherein the read-out of data performed by the network unit from the devices comprises multi-channel communications allowing a parallel read-out of data and a transmission of control signals, and wherein the communication among the network units, among the gateways and between the network units and the gateways is chosen as a wireless communication, respectively.

**6.** The method according to claim 5, wherein the time synchronization means comprise a hardware synchronization unit with synchronization software and a real time clock interface.

**7.** The method according to any one of claims 5 to 6, wherein the networking means comprise means for allowing the network unit to act as a router thus allowing communication with the at least one second network unit being connectable to a second number of devices.

**8.** A computer program with a program code which is suitable for carrying out a method according to any one of claims 5 to 7 when the computer program is run on a computer.
